**Europäisches Patentamt**

**European Patent Office**

**Office européen des brevets**

(11) Veröffentlichungsnummer: **0 137 285**
**A1**

## (12) EUROPÄISCHE PATENTANMELDUNG

(21) Anmeldenummer: **84110341.9**

(22) Anmeldetag: **30.08.84**

(51) Int. Cl.⁴: **G 01 F 1/00**
**G 01 P 5/00**

(30) Priorität: **08.09.83 DE 3332473**

(43) Veröffentlichungstag der Anmeldung:
**17.04.85 Patentblatt 85/16**

(84) Benannte Vertragsstaaten:
**AT BE CH DE FR GB IT LI LU NL SE**

(71) Anmelder: **EBRO Electronic GmbH**
**Peringerstrasse 10**
**D-8070 Ingolstadt(DE)**

(72) Erfinder: **Knopf, Franz**
**Kantstrasse 2**
**D-7580 Brühl(DE)**

(74) Vertreter: **Gauger, Hans-Peter, Dipl.-Ing.**
**Patentanwälte Dipl.-Ing.Hans-Jürgen Müller**
**Dipl.-Chem.Dr.Gerhard Schupfner Dipl.-Ing.Hans-Peter**
**Gauger Lucile-Grahn-Strasse 38**
**D-8000 München 80(DE)**

(54) Verfahren zur Mengenmessung von strömenden Medien und Messeinrichtung zur Durchführung dieses Verfahrens.

(57) Zur Mengenmessung von strömenden Medien werden deren an einem Meßort wechselnde Pegelhöhen mittels eines zur Betätigung von elektrischen Geberkontakten (11,12,13) angeordneten Schwimmers in einzelne digitale Meßstufen umgesetzt und für eine Fernanzeige mit einem Zeittakte überlagert, so daß mit den für jede Meßstufe erhaltenen Gesamtzeit-Zählwerten eine zu der Mengenmessung führende Multiplikation mit einer spezifischen Strömungskenngröße der jeder Meßstufe zugeordneten Pegelhöhe durchgeführt werden kann. Die Mengenmessung wird bevorzugt bei kommunalen Regenüberlaufsystemen an einem durch ein Meßüberlaufgerinne gebildeten Meßort angewendet, wobei die für die Zeit direkt erhaltenen Zählwerte in bezug auf die Zulaufmengen eines Schwemmkanals die Überlaufdauer und die Überlaufhäufigkeit jeder Meßstufe ergeben, deren jeweils auf die maximale Pegelhöhe bezogener Wasserstrom dabei den Multiplikator für eine Berechnung der angefallenen Wassermengen ergibt.

Croydon Printing Company Ltd.

*Fig. 2*

0137285

Hans-Jürgen Müller
Gerhard D. Schupfner
Hans-Peter Gauger
Patentanwälte
European Patent Attorneys
Mandataires en brevets européens

Telefon: (0 89) 4 70 60 55/56
Telex: 5 23016
Telegramm / cable:
Zetapatent® München

Postfach 80 13 69
Lucile-Grahn-Straße 38
D-8000 München 80

Verfahren zur Mengenmessung von strömenden Medien
und Meßeinrichtung zur Durchführung dieses Verfahrens

Die Erfindung bezieht sich auf ein Verfahren zur Mengenmessung von strömenden Medien der durch den Patentanspruch 1 angegebenen Gattung sowie auf eine Meßeinrichtung zur Durchführung dieses Verfahrens nach der Gattung gemäß dem Patentanspruch 5.

In der DE-AS 10 96 254 ist eine Meßeinrichtung der angegebenen Gattung beschrieben, bei welcher die durch den Dauermagneten bewirkte Betätigung der dabei als Schutzgaskontakte ausgebildeten elektrischen Geberkontakte analoge Direktanzeigen für die mit jedem Geberkontakt erfaßten unterschiedlichen Pegelhöhen an einer Höhenskala des Meßgerätes auslöst, durch welche eine durch den Schwimmer angetriebene Antriebsachse des Dauermagneten hindurchgeführt ist. Für die analoge Direktanzeige der mit dieser Meßeinrichtung mithin nur analog erfaßbaren wechselnden Pegelhöhen von strömenden Medien ist dabei noch durch eine getriebemäßige Ankoppelung der Antriebsachse des Dauermagneten an zwei weitere Antriebsachsen für zwei weitere Dauermagneten, in deren Bewegungsbahn weitere elektrische Geberkontakte angeordnet sind, die Besonderheit einer metrischen Unterteilung der einzelnen Meßstufen in cm-, dm- und m-Maße verwirklicht. Alle vorhandenen Geberkontakte sind dafür in einer Kaskadenschaltung miteinander verbunden, an die noch über Richtleiter eine spezielle Relaisschaltung für eine gleichzeitige Übernahme der Meßwerte in Speicherrelais angeschlossen ist. Mit dieser Meßeinrichtung ist es daher möglich, die an der Höhenskala des Meßgerätes für ein-

zeln interessierende Pegelhöhen angezeigten Meßwerte unter Verwendung von Berechnungsformeln für
die am Meßort spezfisch vorliegenden Strömungsverhältnisse auch für eine Mengenmessung der strömenden Medien mit einer Gültigkeit nur für die jeweils
berücksichtigte Pegelhöhe auszuwerten.

Eine Mengenmessung von strömenden Medien ist aktuell
in der Anwendung bei kommunalen Regenüberlaufsystemen interessant, die unterirdisch entweder als
Trennkanalisation oder als Mischkanalisation mit
geschlossenen Schwemmkanälen ausgebildet sind,
über welche die mittels straßenseitig mündender
Regenkanalschächte gesammelten Abwässer zu einer
Kläranlage abgeführt werden. Für die in der Kläranlage durchgeführte Reinigung der Abwässer ist
dabei zur Erstellung eines Langzeitprogrammes eine
genaue Kenntnis der über die Schwemmkanäle herangeführten und dabei entsprechend der ortsgebundenen Regenhäufigkeit variabel beeinflußten Zulaufmengen wichtig. Zur Erlangung dieser Kenntnis über
diese Zulaufmengen wurden bis jetzt bei solchen kommunalen Regenüberlaufsystemen mittels eines sog.
Meßüberlaufgerinnes am Fuß eines an das Kanalisationsnetz angeschlossenen Kanalschachtes gebildete
Meßorte bereit gestellt, die es erlauben, durch eine
Messung der Überfallhöhe eines Wehrs die Wasserströme zu berechnen, die an dem Meßort durch den
angeschlossenen Schwemmkanal strömen. Diese Art
der Ermittlung der in kommunalen Regenüberlaufsystemen anfallenden Zulaufmengen erfüllt damit ebenfalls
das vorgeschilderte Meßprinzip.

Für eine eigentliche Mengenmessung wurden daneben
für solche kommunale Regenüberlaufsysteme noch spezielle netzbetriebene Meßgeräte entwickelt, die von
dem Faradey'schen Induktionsgesetz Gebrauch machen
oder die mit Ultraschall arbeiten. Alle diese Meßgeräte zeichnen sich in der Erzielbarkeit einer größeren Meßgenauigkeit als mit dem vorerwähnten Meß-überlaufgrinne aus, sie besitzen jedoch andererseits einen relativ komplizierten Aufbau und ergeben damit für die schwierigen Meßverhältnisse bei solchen kommunalen Regenüberlaufsystemen eine bau- und installationsbedingte größere Störanfälligkeit sowie entsprechend hohe Anschaffungs- und Unterhaltungskosten. Das mit solchen Meßgeräten verwirklichte Meßprinzip fußt übereinstimmend auf einer analogen Verarbeitung von mittels eines speziellen Meßkopfes ständig ermittelten Meßwerten für die an einem Meßort wechselnde Pegelhöhe des strömenden Mediums, wobei die analoge Verarbeitung eine Linearisierung und Integrierung der Meßwerte einschließt, durch deren Digitalisierung dann die Wasserströme unter Berücksichtigung eines für den Meßort auch dabei meistens in der Ausbildung eines zugeordneten Meßüberfallgerinnes vorgegebenen Meßvolumens direkt durch einen Rechner berechnet werden können.

Die durch die Patentansprüche gekennzeichnete Erfindung löst die Aufgabe, ein Verfahren zur Mengenmessung von strömenden Medien sowie eine Meßeinrichtung zur Durchführung dieses Verfahrens nach der jeweils angegebenen Gattung so auszubilden, daß damit insbesondere zum Kennenlernen der Zulaufmengen, die bei kommunalen Regenüberlaufsystemen an einem durch ein Meßüberlaufgerinne gebildeten Meßort gemessen werden können, direkte Meßergebnisse zu erhalten sind, die in der Genauigkeit wenigstens angenähert mit dem beispielsweise mit einem Ultraschallmeßgerät erreichbaren Genauigkeitsgrad vergleichbar sind.

Die mit der Erfindung erzielbaren Vorteile liegen im wesentlichen darin, daß durch die zusätzliche Berücksichtigung eines Zeitfaktors für das bisher bekannte digitale Meßprinzip einer mit einem Schwimmer durchgeführten Pegelhöhenmessung die damit anstelle von metrischen Zählwerten erhaltenen zeitbezogenen Zählwerte nur noch eine einfache Multiplikation mit einer Rechengröße erfahren müssen, die für die mit diesen Zählwerten digital erfaßten Meßstufen vorgegeben sind. In der Anwendung auf ein kommunales Regenüberlaufsystem mit einem durch ein Meßüberlaufgerinne gebildeten Meßort wird diese Rechengröße der bei der maximalen Pegelhöhe jeder Meßstufe anfallende Wasserstrom sein, der dabei direkt aus einer Eichkurve des Meßüberlaufgerinnes ablesbar ist. Das mit dieser zusätzlichen Berücksichtigung eines Zeitfaktors abgewandelte Meßprinzip ergibt daneben noch die insbesondere für diese Anwendung gewünschte zusätzliche Möglichkeit, mit einem nur geringen apparativen Mehraufwand und daher entsprechend kostensparend auch Angaben über die Überlaufdauer und die Überlaufhäufigkeit zu erhalten, so daß damit unter Berücksichtigung aller beispielsweise über ein Jahr ermittelten Meßwerte die Maßnahmen genau programmiert werden können, die an einer Kläranlage einen gewünschten Wasserwert in den chemischen und biologischen Reinigungsstufen präzise einstellen lassen und/oder mit denen alternativ rechtzeitig Vorkehrungen zur Verhinderung einer Gewässerverschmutzung getroffen werden.

Ein Ausführungsbeispiel der Erfindung wird nachfolgend in der Anwendung auf ein kommunales Regenüberlaufsystem anhand der Zeichnung näher erläutert. Es zeigt

Figur 1          eine Darstellung zur schematischen Veranschaulichung des erfindungsgemäßen Meßprinzips,

Figur 2          ein Blockschaubild zur Darstellung aller wesentlichen Bauelemente der erfindungsgemäßen
Meßeinrichtung,

Figur 3 — eine grafische Darstellung
zur Veranschaulichung einer
mittels der erfindungsgemäßen
Meßeinrichtung durchgeführten
Probemessung,

Figur 4 — das Schreiberdiagramm eines
Ultraschallmeßgerätes, das
bei dieser Probemessung für
Vergleichszwecke parallel verwendet wurde, und

Figur 5 — eine grafische Darstellung
zur Veranschulichung der Eichkurve des Meßüberfallgerinnes,
das bei dieser vergleichenden
Probemessung am Meßort vorhanden war.

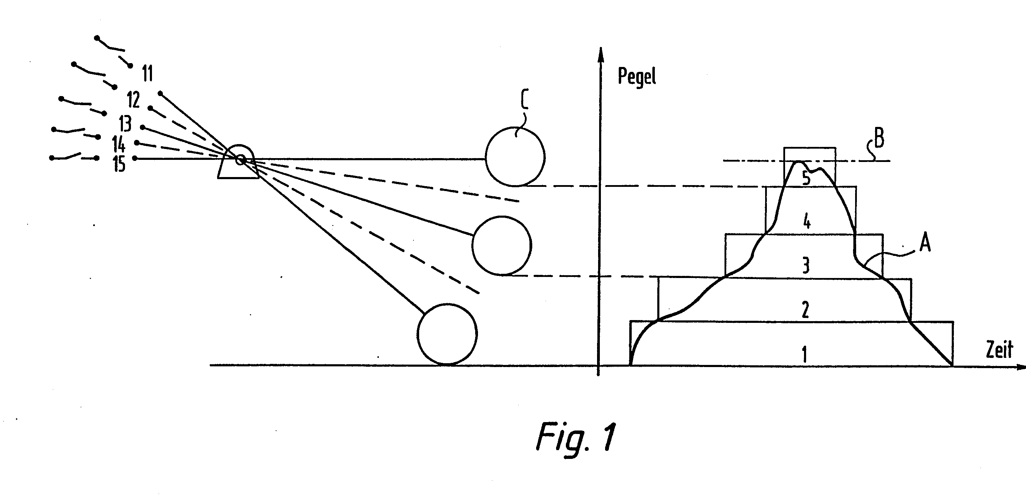

Unter Hinweis auf die Darstellung in Figur 1 ist davon
auszugehen, daß sich die Pegelhöhe des Schwemmkanals
eines kommunalen Regenüberlaufsystems über der Zeit in
Abhängigkeit davon verändern kann, in welchen Mengen
das Regenwasser über die an den Schwemmkanal angeschlossenen Kanalschächte während eines kürzer oder länger
andauernden Regenfalls zuläuft. Die Veränderung der
Pegelhöhe läßt sich als eine Kurve A darstellen, die
sich von einem durch ein Meßüberfallgerinne vorgegebenen Minimalwert bis zu einem mit der strichpunktierten
Linie B angedeuteten Maximalwert erheben kann. Jedem
auf dieser Kurve A liegenden Meßpunkt für eine Pegelhöhe entspricht nun eine spezifische Wasserströmung
durch das am Meßort vorhandene Meßüberfallgerinne,
die sich genormt nach der folgenden Formel berechnen
läßt:

$$V_0 = \frac{2}{3} \cdot \mu \cdot b \cdot \sqrt{2g \cdot h^3} \quad [m^3/s]$$

wobei $V_0$ = Wasserstrom in $[m^3/s]$

$\mu$ = Überfallbeiwert

b = Breite des am Meßüberfallgerinne vorhandenen Wert in $[m]$

g = Erdbeschleunigungskonstante in $[m/s^2]$

h = Überfallhöhe oberhalb der Oberkante des Wehrs in $[m]$

Durch die vorstehende Formel wird mithin beispielsweise die in Figur 5 grafisch dargestellte Eichkurve eines Meßüberfallgerinnes erhalten, aus der somit direkt ablesbar ist, daß beispielsweise einer gemessenen Pegelhöhe von 20 cm oder 50 cm ein momentaner Wasserstrom von 0,39 bzw. 1,65 $m^3$/s durch den an das Meßüberfallgerinne angeschlossenen Schwemmkanal entspricht.

Die in Figur 1 für die Pegelhöhe dargestellte Meß-Kurve A wird mittels eines am Meßort oberhalb der maximalen Pegelhöhe B schwenkbar gelagerten Schwimmers C in einzelne digitale Meßstufen 1 bis 5 umgesetzt. Jeder Meßstufe ist dafür ein elektrischer Geberkontakt 11 bis 15 zugeordnet. Alle Geberkontakte sind mit einer Anordnung in eine gemeinsamen Schaltebene durch eine Kaskadenschaltung miteinander verbunden, wobei zur Erzielung eines ausreichenden Korrosions- und Explosionsschutzes der Anordnung zweckmäßig eine verkapselte Ausführungsform mit einem Gehäuse vorgesehen ist, das neben dem Drehlager des Schwimmers am Fuß des mit dem Meßüberfallgerinne versehenen Kanalschachtes befestigt werden kann. Der gegenseitige Abstand der einzelnen Geberkontakte, die in einer beliebigen Vielzahl n vorgesehen werden können, sollte dabei für eine Anpassung an unterschiedlich vorgegebene Eichkurven sowie auch für die Möglichkeit einer weitergehenden Unterteilung der einzelnen digitalen Meßstufen bis zu einer entsprechenden Vielzahl n längs einer Einstellskala verstellbar sein, um damit tabellarisch für/jeden für eine bestimmte Pegelhöhe gewünschten Meßwert den zugeordneten Geberkontakt präzise einstellen zu können.

Die elektrischen Geberkontakte 11 bis 15 sind berührungslos mittels eines durch den Schwimmer C bewegbaren Dauermagneten betätigbar, der als ein konzentrisch zu dessen Schwenkachse angeordnetes Kreissegment ausgeführt ist. Solange sich die Pegelhöhe innerhalb der digitalen Meßstufe 1 bewegt, ist daher durch diesen Dauermagneten nur der zugeordnete Geberkontakt 11 betätigt, während bei einem Wechsel in die nächste digitale Meßstufe 2 deren Geberkontakt 12 zusätzlich betätigt wird. Nur beim Erreichen der maximalen Pegelhöhe B sind daher alle vorhandenen Geberkontakte 11 bis 15 betätigt.

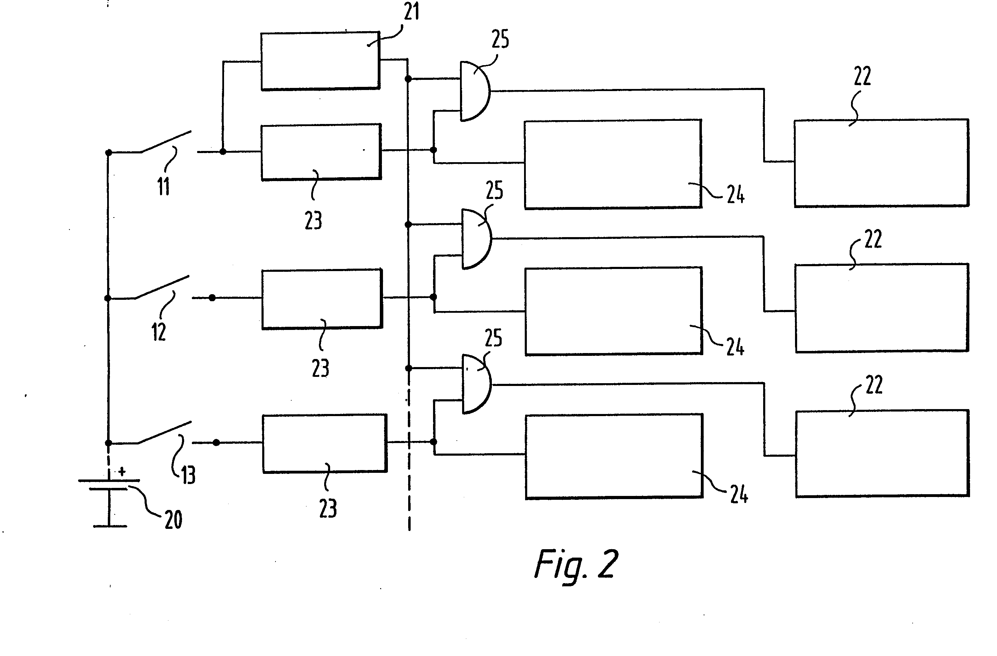

Die elektrischen Geberkontakte 11,12,13 .... n sind nach dem Blockschaubild der Figur 2 an eine netzunabhängige Batterieversorgung 20 angeschlossen, wobei dafür bevorzugt Lithium-Batterien vorgesehen sind, da dieser Batterietyp den bei einerm Regenüberlaufsystem vorherrschenden robusten Meßverhältnissen am besten standhält. Die Kaskadenschaltung dieser Geberkontakte wird in einem vorwählbaren Zeittakt durch einen gemeinsamen Rechteckimpulsoszillator 21 eines über eine Kabelverbindung angeschlossenen Meßgerätes getaktet, das innerhalb des Schmutzfängers an der mit einem Kanaldeckel verschlossenen straßenseitigen Mündung des Kanalschachtes angeordnet wird. Durch eine Entfernung des Kanaldeckels können daher einzelne digitale Zeitanzeigen 22 dieses Meßgerätes jederzeit leicht abgelesen werden, die bei jeder Betätigung eines jeweils zugeordneten Geberkontaktes durch den durch den Schwimmer C bewegten Dauermagneten angesteuert werden. Diese digitalen Zeitanzeigen 22 vermitteln folglich kumulativ für die ihnen jeweils zugeordneten digitalen Meßstufen Gesamtzeit-Zählwerte in Form einer durch die Geberkontakte ausgelösten elektrischen Impulszählung, die optimal an jeder Meßstufe eine zeitverzögerte Weiterleitung durch ein Verzögerungsglied 23 in der Ausbildung eines monostabilen Multivibrators erfahren sollte, um damit die Batterieversorgung 20 zu schonen. Mit solchen Verzögerungsgliedern 23 wird dabei gleichzeitig auch bezweckt, daß nur kurzzeitige Schwankungen der Pegelhöhe am Übergang zweier aufeinanderfolgender Meßstufen keine für die Auswertung der Meßergebnisse unerwünschte Anzeige für die jeweils ranghöhere Meßstufe ergeben und stattdessen die Anzeige für die rangniedrigere Meßstufe bis zur Ankunft des nächsten Zählimpulses bestehen bleibt. Mit den Verzögerungsgliedern 23 kann eine für alle digitalen Zeitanzeigen 22 gleiche oder zweckmäßiger auch unterschiedliche Verzögerung in der Weiterleitung der Zählimpulse gesteuert sein, so daß beispielsweise einem Zählwert für die mit dem Geberkontakt 11 erfaßte Meßstufe 1 eine Zeit $T_1$ von beispielsweise fünf Minuten entspricht, während einem Zählwert der mit dem Geberkontakt 12 erfaßten folgenden Meßstufe 2 eine Zeit $T_1$ von beispielsweise einer Minute mit einer insoweit differenzierten Ablesemöglichkeit an den zugeordneten digitalen Zeitanzeigen 22 entspricht.

Über den als gemeinsamen Zeittaktgeber vorgesehenen Rechteckimpulsoszillator 21 sind die einzelnen Geberkontakte optimal weiterhin an einzelne digitale Ereignisanzeigen 24 des Meßgerätes angeschlossen, mit denen die an jeder Meßstufe erhaltenen Zeitzählwerte für eine von den digitalen Zeitanzeigen 22 getrennte Ereignisanzeige als Ereignis-Zählwerte gezählt werden.

Der Anschluß an diese Ereignisanzeigen 24 ist dabei über die Verzögerungsglieder 23 sowie ein jeweils derart zugeordnetes UND-Glied 25 geführt, daß an der an den Ausgang jedes UND-Gliedes angeschlossenen digitalen Zeitanzeige 22 der jeweils zugeordneten Meßstufe nur dann gleichzeitig mit der zugeordneten Ereignisanzeige 24 ein jeweiliger Zählwert angesteuert wird, wenn der durch den Rechteckimpulsoszillator 21 vorgegebene Zeittakt eine momentane Freigabe durch das der betreffenden Meßstufe zugeordnete Verzögerungsglied 23 erfährt. Erst wenn also beispielsweise in der Meßstufe 1 der zugeordnete Geberkontakt 11 länger als die dafür maßgebliche Verzögerungszeit $T_1$ von angeommen fünf Minuten betätigt bleibt, werden die entsprechenden Gesamtzeit- und Ereignis-Zählwerte an die beiden zugeordneten Anzeigen 22 und 24 weitergeleitet, während jede kürzere Betätigung dieses einen Geberkontaktes 11 für eine Anzeige unberücksichtigt bleibt.

Die durch die digitalen Anzeigen 22 für jede Meßstufe erfaßten Zählwerte lassen sich damit direkt für eine Ermittlung der Überlaufdauer auswerten, während sich die mit den Ereignisanzeigen 24 erfaßten Zählwerte direkt für eine Ermittlung der Überlaufhäufigkeit auswerten lassen. Mit diesen Zählwerten ist weiterhin eine einfache Möglichkeit auch zur Erfassung der in jeder interessierenden Meßstufe angefallenen Wassermengen möglich, wenn dafür noch aus der für das Meßüberfallgerinne des Meßortes geltenden Eichkurve entsprechend der grafischen Darstellung in Figur 5 der Wert für den Wasserstrom abgelesen wird, der für den oberen Grenzwert der mit der jeweiligen Meßstufe erfaßten Pegelhöhe Gültigkeit hat und mit dem dann nur noch eine einfache Rechnung nach der folgenden Formel durchzuführen ist:

$$M_n = (t_{n-1} - t_n) \cdot V_n \ [m^3]$$

wobei $M_n$ = Wasermenge der interessierenden Meßstufe n in $[m^3]$

$t_n$ = Gesamteinschaltzeit der interessierenden Meßstufe n, ermittelt aus dem Produkt
des an der zugeordneten digitalen Zeitanzeige 22 abzulesenden Gesamtzeit-Zählwertes
und des an der zugeordneten Ereignisanzeige
24 abzulesenden Ereignis-Zählwertes für
diese Meßstufe in $[s]$

$V_n$ = Wasserstrom bei der maximalen Pegelhöhe
der Meßstufe n, ablesbar aus einer Eichkurve des Meßüberfallgerinnes entsprechend
der Darstellung in Figur 5 in $[m^3/s]$

Die aus der Eichkurve des Meßüberfallgerinnes ablesbaren Werte können für diese Berechnung optimal auch in
einem Rechner gespeichert sein, für den dann an dem
Meßgerät der vorbeschriebenen Meßeinrichtung zweckmäßig
eine Anschlußmöglichkeit vorgesehen ist,um die Angaben
der digitalen Anzeigegeräte 22 und der Ereignisanzeigen
24 unmittelbar übernehmen zu können. Die vorstehend anhand der Figur 2 beschriebene elektronische Schaltung
des Meßgerätes umfaßt daneben noch weitere Bauteile,
wie insbesondere Kapazitäten, Widerstände, Schalttransistoren und Dioden, die als Vorschaltglieder einen geringen Stromverbrauch sicher stellen sollen.

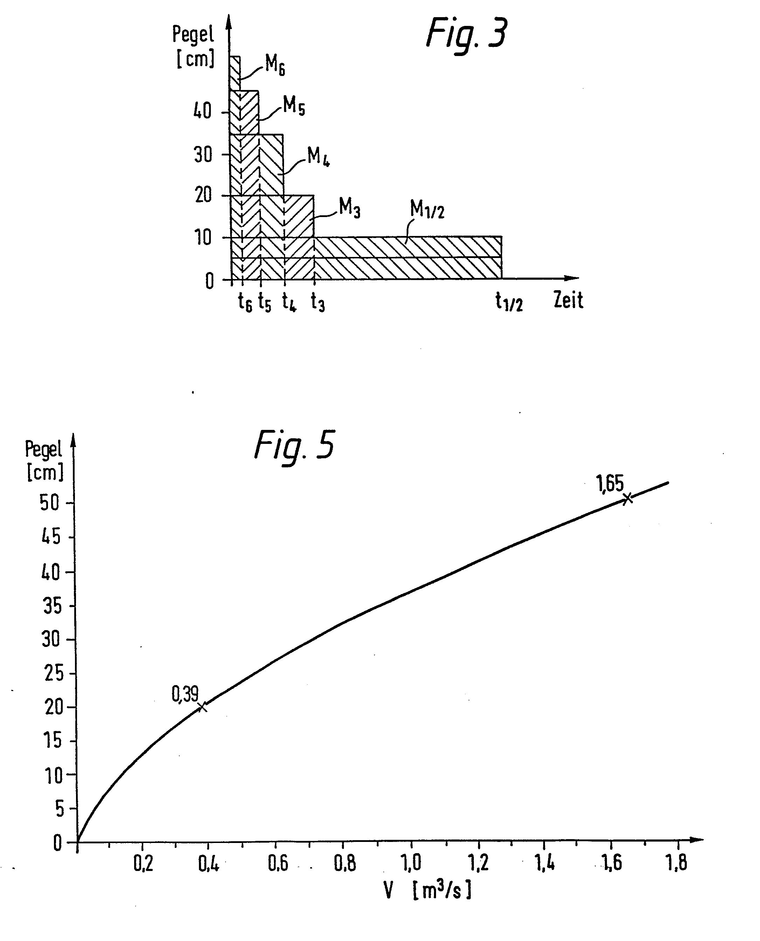

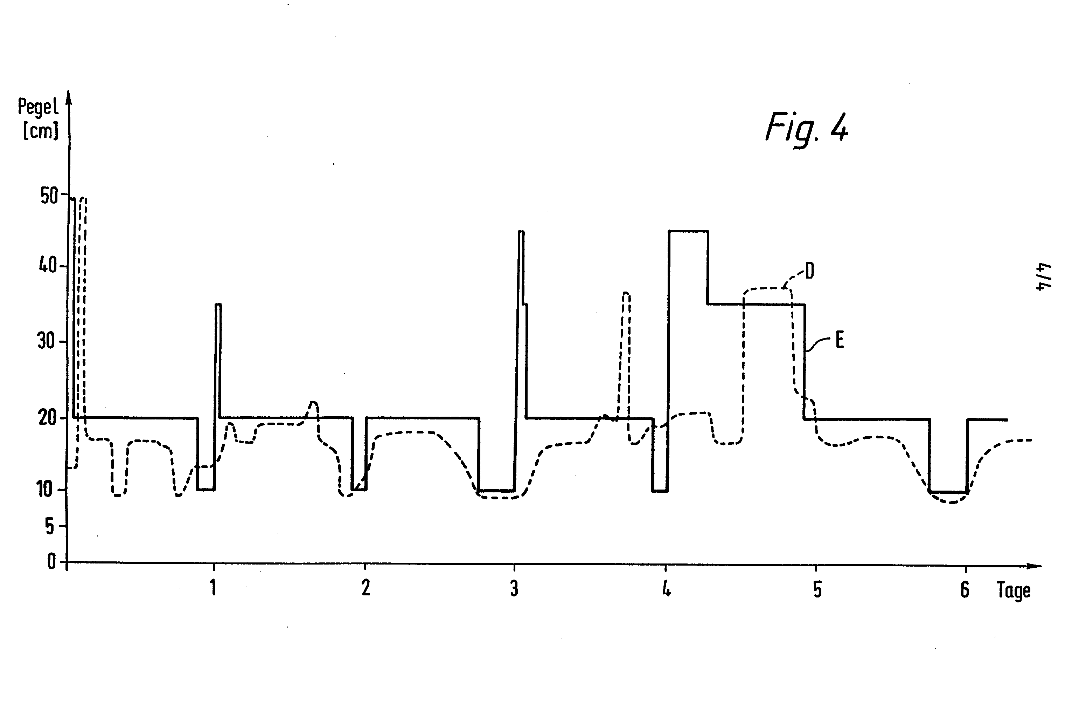

Bei einer für Vergleichszwecke mit einem herkömmlichen Ultraschallmeßgerät am Einlauf eines Schwemmkanals
in eine Kläranlage über insgesamt 40 Tage und 16 Stunden durchgeführten Probemessung wurde für die vorbeschriebene Meßeinrichtung das in Figur 3 dargestellte
Meßprotokoll erhalten. Die Meßeinrichtung war dabei mit sechs elektrischen Geberkontakten für eine Unterteilung der Meßkurve A in sechs digitale Meßstufen in den Pegelhöhen 0,5,10,20,35 und 45 cm ausgerüstet. Für jede Meßstufe war eine gleichgetaktete Verzögerung $t_1$ bis $t_6$ von 30 s vorgegeben. Für die ersten sechs Tage dieser Probemessung wurde für das parallel eingesetzte Ultraschallmeßgerät das in Figur 4 mit der gestrichelten Linie D dargestellte und im übrigen über die gesamte Zeitdauer fortgesetzte Schreiberdiagramm erhalten. In dieser Darstellung ist mit der ausgezogenen Linie E gleichzeitig die grafische Auswertung des Meßprotokolls gemäß Figur 3 über denselben Zeitraum festgehalten, wobei hierfür die vorhanden gewesenen Werte der Eichkurve gemäß Figur 5 eines Meßüberfallgerinnes berücksichtigt wurden. Bei dem Schreiberdiagramm bedeuten die Spitzen der gestrichelten Linie D kürzer andauernde Gewitterregen, während die waagrechten Abschnitte länger andauernde Landregen bedeuten. Eine Auswertung der Meßergebnisse dieser Parallelmessung ergab für die erfindungsgemäße Meßeinrichtung einen Meßfehler von nur +1,3 %, während unter Zugrundelegung derselben Eichkurve des Meßüberfallgerinnes für die durch das Ultraschallmeßgerät ausschließlich gemessenen Pegelhöhen als Bezugsgröße für diese Parallelmessung ein Meßfehler von immerhin + 14 % erhalten wurde.

Patentansprüche

1. Verfahren zur Mengenmessung von strömenden Medien, bei dem die Mengemessung am Meßort beeinflussende wechselnde Pegelhöhen als analoge Meßgrößen erfaßt werden und eine Umsetzung in digitale Meßstufen für eine elektrische Impulszählung an einer vom Meßort fernen Anzeige erfahren, dadurch g e - k e n n z e i c h n e t , daß die elektrische Impulszählung bei jeder Meßstufe nach einem vorgegebenen Zeittakt kumulativ durchgeführt wird, und daß die für jede Meßstufe an der Fernanzeige erhaltenen Gesamtzeit-Zählwerte jeweils mit spezifischen Strömungskenngrößen der jeder Meßstufe zugeordneten Pegelhöhe multipliziert werden.

2. Verfahren nach Anspruch 1, dadurch g e k e n n - z e i c h n e t , daß die elektrische Impulszählung für ausgewählte Meßstufen nach einem gleich oder unterschiedlich verzögerten Zeittakt durchgeführt wird.

3. Verfahren nach Anspruch 1 oder 2, dadurch g e - k e n n z e i c h n e t , daß die an jeder Meßstufe erhaltenen Zeitzählwerte für eine getrennte Ereignisanzeige als Ereignis-Zählwerte gezählt werden.

4. Verfahren nach den Ansprüchen 1 bis 3, dadurch g e k e n n z e i c h n e t , daß in der Anwendung bei kommunalen Regenüberlaufsystemen an einem durch ein Meßüberlaufgerinne gebildeten Meßort die für jede Meßstufe des Meßüberlaufgerinnes erhaltenen Gesamtzeit- und Ereignis-Zählwerte als Angaben über die Überlaufdauer und die Überlaufhäufigkeit der über einen Schwemmkanal zulaufenden Abwässer sowie zur Berechnung der in jeder interessierenden Meßstufe angefallenen Wassermengen ausgewertet werden nach der Formel

$$M_n = (t_{n-1} - t_n) \cdot V_n \; [m^3]$$

wobei $M_n$ = Wassermenge der interessierenden Meßstufe n in $[m^3]$

$t_n$ = gesamte Einschaltzeit der interessierenden Meßstufe n, ermittelt aus dem Produkt der Gesamtzeit- und Ereignis-Zählwerte für diese Meßstufe in $[s]$

$V_n$ = Wasserstrom bei der maximalen Pegelhöhe der Meßstufe n, ablesbar aus der Eichkurve des Meßüberfallgerinnes in $[m^3/s]$

5. Meßeinrichtung zur Durchführung des Verfahrens nach Anspruch 1, mit einem am Meßort beweglich gelagerten Schwimmer (C), einem durch den Schwimmer (C) bewegbaren Dauermagneten und in der Bewegungsbahn des Dauermagneten voneinander beabstandet angeordneten elektrischen Geberkontakten (11 bis 15), die für eine aufeinanderfolgende Betätigung durch den Dauermagneten vorzugsweise in einer Kaskadenschaltung miteinander verbunden und an ein vom Meßort fernes Meßgerät angeschlossen sind, dadurch g e k e n n - z e i c h n e t , daß die Geberkontakte (11 bis 15) über einen gemeinsamen Zeittaktgeber (21), wie einen Rechteckimpulsoszillator, an einzelne digitale Zeitanzeigen (22) des Meßgerätes angeschlossen
sind.

6. Meßeinrichtung nach Anspruch 5, dadurch  g e -
k e n n z e i c h n e t , daß jede digitale
Zeitanzeige (22) über ein Verzögerungsglied (23),
wie einen monostabilen Multivibrator, angesteuert ist.

7. Meßeinrichtung nach Anspruch 5 oder 6, dadurch
g e k e n n z e i c h n e t , daß die Geberkontakte (11 bis 15) über den gemeinsamen Zeittaktgeber (21) und das gegebenenfalls jeweils vorhandene Verzögerungsglied (23) an einzelne  digitale Ereignisanzeigen (24) des Meßgerätes angeschlossen sind.

8. Meßeinrichtung nach einem der Ansprüche 5 und 6
und Anspruch 7, dadurch  g e k e n n z e i c h n e t,
daß die digitale Zeitanzeige (22) und die digitale
Ereignisanzeige (24) jedes Geberkontaktes (11 bis
15) über ein UND-Glied (25) gekoppelt sind.

9. Meßeinrichtung nach einem der Ansprüche 5 bis 8,
dadurch  g e k e n n z e i c h n e t , daß zur
elektrischen Versorgung der Geberkontakte (11 bis
15) und des dabei über eine Kabelverbindung angeschlossenen Meßgerätes (22) eine Batterieversorgung
(20), insbesondere eine Versorgung mittels Lithium-
batterien, vorgesehen ist.

10. Meßeinrichtung nach einem der Ansprüche 5 bis 9,
dadurch  g e k e n n z e i c h n e t , daß für
das Meßgerät eine Anschlußmöglichkeit für einen
Rechner zur Übernahmemöglichkeit der Zählwerte
von den digitalen Zeitanzeigen (22) und den digitalen Ereignisanzeigen (24) vorgesehen ist.

*Fig. 1*

0137285

Fig. 2

Fig. 3

Fig. 5

*Fig. 4*

**Europäisches Patentamt**

# EUROPÄISCHER RECHERCHENBERICHT

## EINSCHLÄGIGE DOKUMENTE

EP 84110341.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | <u>GB - A - 1 430 772</u> (INSTRUMENTATION)<br>* Fig. 1-3; Seite 5, Zeile 101 - Seite 6, Zeile 50 * | 1 | G 01 F 1/00<br>G 01 P 5/00 |
| Y | | 5 | |
| Y | <u>DE - A1 - 2 418 860</u> (KÜBLER)<br>* Fig. 1 * | 5 | |
| A | <u>US - E - 29 868</u> (SCHONTZLER et al.)<br>* Zusammenfassung; Fig. 5,6 * | 1,5 | |
| A | <u>DE - C - 1 096 254</u> (SIEMENS)<br>* Fig. 2 * | 1,5 | |
| A | <u>US - A - 4 127 030</u> (MARTIG)<br>* Fig. 1 * | 10 | |

**RECHERCHIERTE SACHGEBIETE (Int. Cl.4)**

G 01 F 1/00
G 01 F 23/00
G 01 P 5/00

Der vorliegende Recherchenbericht wurde für alle Patentansprüche erstellt.

| Recherchenort | Abschlußdatum der Recherche | Prüfer |
|---|---|---|
| WIEN | 30-11-1984 | BURGHARDT |

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument